Europäisches Patentamt

European Patent Office

Office européen des brevets

(19)

(11) Numéro de publication : **0 168 273 B1**

(12) **FASCICULE DE BREVET EUROPÉEN**

(45) Date de publication du fascicule du brevet :
17.08.88

(21) Numéro de dépôt : 85401039.4

(22) Date de dépôt : 28.05.85

(51) Int. Cl.⁴ : **B 62 K 25/04**

(54) **Dispositif de couplage entre une suspension avant et une suspension arrière de véhicule.**

(30) Priorité : 08.06.84 FR 8409037

(43) Date de publication de la demande :
15.01.86 Bulletin 86/03

(45) Mention de la délivrance du brevet :
17.08.88 Bulletin 88/33

(84) Etats contractants désignés :
AT CH DE GB LI LU NL SE

(56) Documents cités :
DE-A- 3 150 357
FR-A- 2 397 317
FR-A- 2 480 202

(73) Titulaire : ELF FRANCE
2 place de la Coupole La Défense 6
F-92400 Courbevoie (FR)

(72) Inventeur : De Cortanze, André
49 Parc du Val d'Or
F-92210 St. Cloud (FR)

(74) Mandataire : Hirsch, Marc-Roger
Cabinet Hirsch 34 rue de Bassano
F-75008 Paris (FR)

## Description

La présente invention se rapporte à un dispositif de couplage entre la suspension d'une roue avant et la suspension d'une roue arrière d'un véhicule à roues tel qu'un motocycle, lesdites suspensions comprenant une plaque mobile et un ressort de suspension comprimé par ladite plaque sous l'action de la charge agissant respectivement sur la roue avant ou la roue arrière et comportant de chaque côté avant et arrière du véhicule un moyen de couplage mécanique dont l'une des extrémités est articulée à l'appui du ressort de suspension tandis que son autre extrémité est articulée à un bras d'une barre de torsion montée rotative sur au moins un palier porté par le véhicule entre les suspensions avant et arrière du véhicule, de telle sorte que, par rapport à une situation préréglée de répartition des écrasements de la suspension avant et de la suspension arrière du véhicule, une surcharge sur la roue avant par rapport à la situation préréglée soit supportée partiellement, via l'organe de couplage rotatif, par la roue arrière et vice versa pour une surcharge sur la roue arrière ou pour une diminution de la charge supportée par l'une des suspensions. Un tel dispositif est décrit dans DE-A-3 150 357.

Dans le domaine de la suspension des véhicules automobiles, on sait réaliser un couplage entre les côtés droit et gauche du véhicule, en général à l'aide de barres de torsion appelées alors « barres antidévers », de telle façon qu'une surcharge apparue d'un côté du véhicule soit supportée en partie par l'autre côté du véhicule. On obtient ainsi, moyennant un léger durcissement de la suspension, une amélioration de la tenue de route du véhicule, en particulier en cas de surcharge latérale et un meilleur aspect dynamique du .véhicule dont la caisse reste alors sensiblement parallèle au sol même sur les sols en pente, ce qui diminue d'autant les risques de renversement et de roulis. On cherche par contre encore à réduire le tangage des véhicules qui se manifeste par des oscillations d'avant en arrière et vice versa et notamment par une plongée du train avant au cours du freinage. Cette plongée du train avant est particulièrement gênante sur les motocycles où elle est appelée « salut ». Sa réduction peut s'effectuer par couplage mécanique entre les suspensions avant et arrière du véhicule qui sont relativement éloignées l'une de l'autre.

Pour tenter de réaliser le couplage entre les suspensions avant et arrière, il a déjà été proposé de grouper les ressorts de suspension avant et arrière dans un boîtier commun et de les faire comprimer par des tringles reliées mécaniquement à des bras de suspension des roues mais cette disposition compacte et avantageuse des ressorts de suspension avant et arrière ne réalise pas un véritable couplage correcteur du mouvement de roulis ou de salut des véhicules.

L'un des buts de la présente invention est de permettre de réaliser le couplage de la suspension de la roue avant d'un véhicule tel qu'un motocycle réalisée à l'aide d'un bras de suspension et d'un ressort de suspension tel qu'un ressort hélicoïdal comprimé, à la suspension arrière de même type du véhicule (de telle façon qu'une surcharge sur la roue avant soit pratiquement répartie entre les roues avant et arrière et vice versa) de manière plus compacte et plus fiable tout en ménageant un accès aisé à ce couplage et à d'éventuels moyens de réglage de la répartition de la charge entre les roues avant et arrière. Ce but est atteint le fait que la barre de torsion est montée rotative dans une direction transversale à la direction longitudinale du véhicule et que l'un des bras d'extrémité de la barre de torsion est articulé à une bielle qui est elle-même articulée par une tête d'articulation à l'une des plaques mobiles d'appui du ressort de suspension respectif tandis que l'autre bras d'extrémité de la barre de torsion est relié par un bras coudé de façon articulée à la plaque mobile d'appui du ressort de suspension respectif.

A cet effet, le dispositif de couplage entre les suspensions avant et arrière comporte de chaque côté avant et arrière du véhicule une bielle ou équivalent dont l'une des extrémités est articulée à l'appui du ressort de suspension tandis que son autre extrémité est articulée à un bras d'un organe de couplage rotatif élastique entre les suspensions avant et arrière du véhicule, chaque bielle étant couplée au bras correspondant dans une direction opposée à l'autre bielle, de telle sorte que, par rapport à une situation préréglée de répartition des écrasements de la suspension avant et de la suspension arrière du véhicule, une surcharge sur la roue avant par rapport à la situation préréglée soit supportée partiellement, via l'organe de couplage rotatif, par la roue arrière et vice versa pour une surcharge sur la roue arrière ou pour une diminution de la charge supportée par l'une des suspensions.

L'organe de couplage rotatif élastique est de préférence une barre de torsion montée rotative sur au moins un palier porté par le véhicule et dont chaque extrémité est reliée au moins en rotation au bras articulé à l'une des bielles qui est elle-même articulée à l'appui du ressort de suspension respectif avant ou arrière.

Selon un autre mode de réalisation de l'invention, la longueur d'au moins l'une des bielles ou équivalent est réglable sous charge de manière à permettre de modifier le préréglage des écrasements de la suspension avant et de la suspension arrière.

Lorsqu'au moins l'un des ressorts de suspension est constitué par un ressort hélicoïdal comprimé sur un appui annulaire par une plaque mobile reliée à une tige de compression traversant le ressort hélicoïdal et la plaque mobile de façon sensiblement axiale, la bielle ou équivalent coopérant avec le ressort de suspension est articulée à un embout fixé à l'extrémité de la tige de compression après sa traversée de la plaque mobile. L'embout est alors de préférence fixé à l'extrémité de la tige de compression par vissage réglable d'un alésage fileté de cet embout sur un filetage d'extrémité de la tige de compression. Le filetage d'extrémité de la tige de compression est susceptible d'être utilisé simultanément pour le réglage de la position de l'embout sur lequel est articulée la bielle ou équivalent et pour le réglage de la plaque mobile de compression du ressort de suspension.

D'autres buts, avantages et caractéristiques de l'invention apparaîtront à la lecture de la description d'un mode de réalisation, faite à titre non limitatif et en regard du dessin annexé où :

la figure 1 est une représentation schématique en perspective du dispositif de couplage élastique entre une suspension avant et une suspension arrière de véhicule ;

la figure 2 est une vue de côté en élévation d'un motocycle utilisant le dispositif de couplage rotatif selon l'invention entre la suspension de la roue arrière et celle de la roue avant.

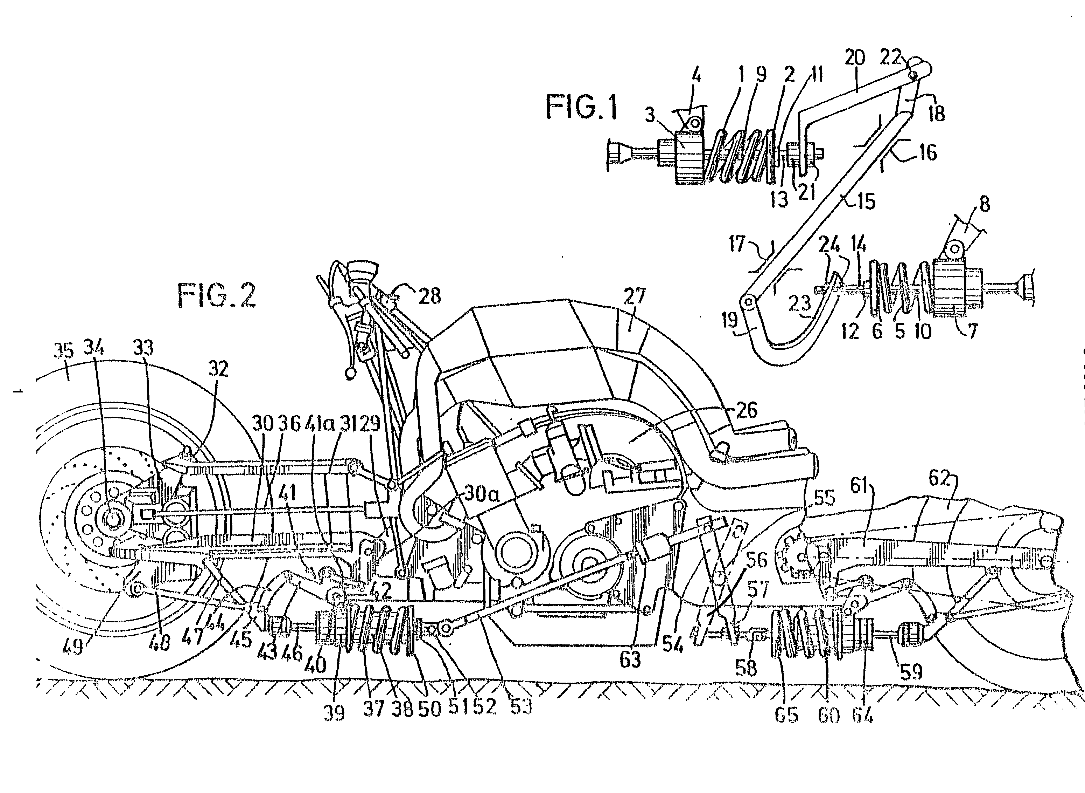

Le dispositif de couplage des suspensions avant et arrière représenté à la figure 1 se propose de coupler la partie active de la suspension avant constituée d'un ressort hélicoïdal de compression 1 serré entre une plaque mobile 2 et un collier de support 3 articulé au véhicule par une patte de support 4 avec la partie active de la suspension arrière constituée de même d'un ressort hélicoïdal de compression 5 serré entre une plaque mobile 6 et un collier de support 7 relié par une patte de support 8 au châssis du véhicule. Les plaques mobiles 2 et 6 sont reliées par des tiges de compression 9 et respectivement 10 à des leviers ou autres organes de suspension qui provoquent une traction sur ces tiges en fonction des charges de suspension, laquelle traction est constamment équilibrée par la force de réaction du ressort hélicoïdal correspondant 1 ou respectivement 5 par l'intermédiaire de la plaque mobile correspondante 2 ou 6. Les tiges 9 et 10 traversent les colliers de support correspondants 3 ou 7 qui leur servent de palier ainsi que le ressort hélicoïdal correspondant 1 ou 5 et la plaque mobile 2 ou 6 à laquelle elles sont reliées par un écrou 11 ou respectivement 12 vissé sur une partie filetée d'extrémité 13 ou 14 de la tige 9 ou 10.

Selon l'invention, le dispositif de couplage est constitué d'une barre de torsion 15 dont l'axe est sensiblement perpendiculaire à celui des tiges 9 et 10 et qui est montée à rotation sur des paliers 16 et 17 solidaires du châssis du véhicule (non représenté). A chaque extrémité de la barre de torsion 15 sont prévus des bras 18 et 19 permettant de lui appliquer un couple de torsion. Le bras 18 dont le plan de débattement est situé à proximité de l'axe de la tige 9 est relié à celle-ci par une bielle 20 dont l'une des extrémités est fixée ou articulée à la tige 9 par l'intermédiaire d'écrous réglables 21 tandis que l'autre extrémité est articulée au bras 18 par un axe d'articulation 22. Le bras 19 dont le plan de débattement est situé à distance de l'axe de la tige de compression 10, est relié à celle-ci par un prolongement coudé 23 jouant le rôle d'une bielle souple et dont l'extrémité est fixée par des écrous réglables 24 à la partie filetée 14 de la tige 10.

Le fonctionnement du dispositif de couplage de suspension représenté à la figure 1 va maintenant être explicité. On suppose que la suspension avant subit une surcharge due par exemple à un freinage. La tige 9 subit une traction supplémentaire qui comprime le ressort 1 et déplace les écrous 21 vers la gauche de la figure en tirant ainsi par l'intermédiaire de la bielle 20 sur l'axe d'articulation 22. Le bras 18 tourne ainsi dans le sens inverse des aiguilles d'une montre ou trigonométrique et entraîne la barre de torsion 15 en rotation dans le sens trigonométrique.

Par suite de la rotation de la barre de torsion 15 et du levier 19 qui lui est relié, la tige 10 de la suspension arrière est repoussée vers la droite de la figure et la plaque mobile 6 reliée à la tige 10 comprime le ressort hélicoïdal 5 de la suspension arrière alors qu'aucune charge supplémentaire en provenance du véhicule ne s'applique à ce ressort 5 qui est au contraire plutôt délesté de la surcharge appliquée à l'avant par la décélération consécutive au freinage du véhicule. Le ressort de suspension arrière 5 réagit donc à la sollicitation de la barre de torsion 15 par un effort de réaction qui soumet la barre de torsion 15 à un couple de torsion de telle façon qu'une partie de la surcharge appliquée à la suspension avant du véhicule est alors supportée par le ressort de suspension arrière qui se comprime. Le dispositif de couplage selon l'invention produit finalement un raidissement de la suspension avant soumise à une surcharge lorsque la suspension arrière n'est pas soumise à la même surcharge, ce qui évite un écrasement exagéré de l'avant par rapport à l'arrière. En cas de délestage de l'avant ou de surcharge de l'arrière par rapport à l'avant, un phénomène de compensation similaire se produit entre les suspensions avant et arrière.

Sur le motocycle représenté à la figure 2, on reconnaît un ensemble motopropulseur 26 surmonté par des conduits d'échappement 27 et un guidon 28 et prolongé par une plaque avant 29 sur laquelle est articulé le bras principal 30 de la suspension avant. Un bras supérieur 31 articulé à l'ensemble motopropulseur 26 coopère avec le bras principal 30 pour supporter sur des pivots (seul le pivot supérieur 32 est représenté) un axe de pivotement incliné d'un support de pivot 33 de la fusée 34 de la roue avant 35 dont l'orientation est contrôlée par une bielle 36 reliée par des cardans au guidon 28.

La liaison entre le bras principal 30 et le ressort de suspension avant 37 est réalisée à l'aide d'une série de bielles et de leviers dont les fonctions sont décrites dans la demande de brevet ayant pour titre : « dispositif de suspension et/ou d'amortissement pour un bras support de roue de véhicule » déposée au nom du titulaire de la présente demande.

Le ressort 37 est monté sur un corps d'amortisseur 38 articulé par un collier 39 sur le petit bras inférieur 40 d'un levier à trois bras 41 articulé en 42 sur un prolongement de la plaque avant 29. Un grand bras 43 du levier 41 est relié par une bielle 44 à une plaque d'articulation 45 montée à l'extrémité d'une tige coulissante 46 qui traverse le corps d'amortisseur 38. La plaque d'articulation 45 est reliée par une bielle 47 au bras principal 30 et par une bielle 48 à un bloc support 49 des garnitures de frein avant. Comme expliqué à la figure 1, la tige traversante 46 porte à son extrémité de droite sur la figure une plaque mobile 50 qui maintient le ressort de suspension avant 37 comprimé sur le collier 39 et le bras moyen du levier à trois bras 41 est relié par une biellette 41a à un bec 30a du bras principal 30. La tige 46 comporte à son extrémité de droite une partie filetée sur laquelle la plaque 50 est fixée de façon réglable par des vis de réglage 51 et la partie filetée dépasse vers la droite pour recevoir une tête d'articulation 52 sur laquelle est articulée l'extrémité d'une bielle de couplage inclinée 53 qui est fixée à son autre extrémité de façon articulée à l'extrémité d'un bras de levier 54 dirigé vers le haut de la figure et monté à l'extrémité d'une barre de torsion 55 montée dans des paliers transversalement à l'axe longitudinal du motocycle.

A son autre extrémité, la barre de torsion 55 est solidaire d'un bras de levier 56 dirigé vers le bas de la figure et vers le sol et lui-même relié de façon articulée par un bras coudé 57 à une tête d'articulation 58 fixée à l'extrémité de gauche d'une tige traversante 59 identique ou de même type que la tige traversante 46 utilisée pour la suspension de la roue avant. Le ressort hélicoïdal de suspension arrière 60 est monté de façon analogue au ressort de suspension avant 37 et sa liaison avec le bras de suspension arrière 61 qui porte la roue arrière 62 ne sera pas décrite en détail. On remarque que la bielle de couplage 53 est réalisée en deux parties assemblées par un filetage réglable avec un écrou de blocage 63 de telle façon que l'on puisse faire varier la longueur de la bielle 53.

On va maintenant décrire le fonctionnement de la suspension de motocycle représentée à la figure 2. On doit tout d'abord préciser que les blocs ressort-amortisseur avant 38 et arrière 64 restent sensiblement horizontaux au cours du débattement de la suspension qu'ils contrôlent, seules les tiges 46 et 59 et les plaques mobiles 50 et 65 se déplaçant pour faire varier la compression axiale des ressorts hélicoïdaux de suspension 37 et 60 et faire déplacer les pistons internes (non représentés) des amortisseurs.

Les suspensions avant et arrière sont représentées en position de charge normale avec le conducteur à bord du motocycle. On suppose que le conducteur déclenche un freinage brutal du motocycle. La charge du véhicule se transfère alors partiellement sur la roue avant du fait de la décélération qui suit le freinage et le ressort 37 tend à s'écraser encore plus, ce qui provoque le déplacement vers la gauche de la figure de la tige 46 et de la tête d'articulation 52 et tend à faire tourner le bras de levier 54 dans le sens trigonométrique.

La barre de torsion 55 entraîne élastiquement le bras de levier opposé 56 en rotation dans le même sens, ce qui comprime le ressort 60 qui avait tendance à se délester du fait du transfert de charge sur l'avant. Sous l'effet de la réaction supplémentaire du ressort 60 de suspension arrière, la barre de torsion 55 se tord partiellement de telle sorte qu'une partie seulement de la surcharge de l'avant est transmise à l'arrière, ce qui empêche néanmoins le basculement du motocycle vers l'avant au cours du freinage, typiquement appelé « salut », ou tout au moins le réduit considérablement.

Dans le cas inverse, par exemple à la réaccélération qui suit un freinage, la roue avant 35 est délestée d'une partie de sa charge et la plaque mobile 50 se déplace vers la droite de la figure avec la tête d'articulation 52, ce qui tend à faire tourner le bras de levier 54 dans le sens des aiguilles d'une montre. Le bras de levier 56 tourne dans le même sens et le bras coudé 57 entraîne ainsi la tige 59 vers la gauche de la figure 2 et déleste également la suspension arrière. Le délestage de l'avant est ainsi limité et le conducteur conserve une bonne adhérence de direction sur la roue avant au cours des reprises d'accélération brutales. On voit que le couplage selon l'invention entre les suspensions avant et arrière s'oppose efficacement au développement des dissymétries d'écrasement entre les suspensions avant et arrière, cette opposition pouvant même être efficace dans le cas où l'une des suspensions tendrait à s'affaisser accidentellement par exemple à la suite de la rupture de l'un des ressorts de suspension 37 ou 60.

Le couplage qui a été proposé sur les figures 1 et 2 à l'aide de bielles, de leviers et d'une barre de torsion peut être réalisé, le cas échéant, par d'autres moyens tels que des systèmes à câbles et gaines. De même, on comprend que les ressorts de suspension hélicoïdaux 37 et 60 peuvent être disposés selon d'autres orientations par exemple selon des axes verticaux ou inclinés, pourvu que leur inclinaison varie peu au cours du débattement de la suspension. En modifiant la longueur de la bielle 53 à l'aide du vissage correspondant lorsque les suspensions avant et arrière sont en charge, on modifie le point d'équilibre entre les charges des suspensions avant et arrière et l'on peut ainsi corriger l'assiette du véhicule en charge tout en assurant un bon couplage entre l'avant et l'arrière.

**Revendications**

1. Dispositif de couplage entre la suspension (1 ; 37, 38) d'une roue avant (35) et la suspension (5 ; 60, 64) d'une roue arrière (62) d'un véhicule à roues tel qu'un motocycle, lesdites suspensions comprenant une plaque mobile (2,6 ; 50, 65) et un ressort de suspension (1,5 ; 37, 60) comprimé par ladite plaque sous l'action de la charge agissant respectivement sur la roue avant ou la roue arrière et comportant de chaque côté avant et arrière du véhicule un moyen de couplage mécanique (20, 23 ; 53, 57) dont l'une des extrémités est articulée à l'appui (2,6 ; 50, 65) du ressort de suspension (1, 5 ; 37, 60) tandis que son autre extrémité est articulée à un bras (18, 19 ; 54, 56) d'une barre de torsion (15, 55) montée rotative sur au moins un palier (16, 17) porté par le véhicule entre les suspensions avant et arrière du véhicule, de telle sorte que, par rapport à une situation préréglée de répartition des écrasements de la suspension avant et de la suspension arrière du véhicule, une surcharge sur la roue avant (35) par rapport à la situation préréglée soit supportée partiellement, via l'organe de couplage rotatif, par la roue arrière (62) et vice versa pour une surcharge sur la roue arrière ou pour une diminution de la charge supportée par l'une des suspensions, caractérisé en ce que la barre de torsion (15, 55) est montée rotative dans une direction transversale à la direction longitudinale du véhicule et en ce que l'un des bras d'extrémité (54) de la barre de torsion (55) est articulé à une bielle (53) qui est elle-même articulée par une tête d'articulation (52) à l'une des plaques mobiles d'appui (50) du ressort de suspension respectif (37) tandis que l'autre bras d'extrémité (56) de la barre de torsion (55) est relié par un bras coudé (57) de façon articulée à la plaque mobile d'appui (65) du ressort de suspension respectif (60).

2. Dispositif de couplage selon la revendication 1, caractérisé en ce que la longueur de la bielle (53) est réglable sous charge de manière à permettre de modifier le préréglage des écrasements relatifs de la suspension avant et de la suspension arrière.

3. Dispositif de couplage selon l'une des revendications 1 ou 2, dans lequel au moins l'un des ressorts de suspension est constitué par un ressort hélicoïdal comprimé (37, 60) sur un appui annulaire (39) par une plaque mobile (50, 65) reliée à une tige de compression (46, 59) traversant le ressort hélicoïdal et la plaque mobile de façon sensiblement axiale, caractérisé en ce que la bielle (53) et le bras coudé (57) qui coopèrent avec le ressort de suspension (37, 60) sont chacun articulés à un embout (52, 58) fixé à l'extrémité de la tige de compression (46, 59) traversant la plaque mobile (50, 65).

4. Dispositif de couplage selon la revendication 3, caractérisé en ce que l'embout (52, 58) est fixé à l'extrémité de la tige de compression (46, 59) par vissage réglable d'un alésage fileté de cet embout sur un filetage d'extrémité de la tige de compression.

5. Dispositif de couplage selon la revendication 4, caractérisé en ce que le filetage d'extrémité de la tige de compression (46, 59) est susceptible d'être utilisé simultanément pour le réglage de la position de l'embout (52, 58) sur lequel est articulée la bielle (53) ou le bras coudé (57) et pour le réglage de la plaque mobile (50, 65) de compression du ressort de suspension (37, 60).

**Claims**

1. Device for coupling to each other the front wheel (35) suspension (1, 37, 38) and the rear wheel (62) suspension (5, 60, 64) of a wheeled vehicle, such as a motorcycle, wherein said suspensions comprise a movable plate (2, 6, 50, 65) and a suspension spring (1, 5, 37, 60) compressed by said plate under the action of the load acting respectively on the front wheel and the rear wheel and comprising on each front and rear side of the vehicle a mechanical coupling means (20, 23, 53, 57) one end of which is pivotally connected to the rest piece (2, 6, 50, 65) of the suspension spring (1, 5, 37, 60), while its other end is pivotally connected to an arm (18, 19, 54, 56) of a torsion bar (15, 55) rotatively mounted on at least one bearing (16, 17) supported by the vehicle between the front and rear suspensions thereof, in such a manner that, with reference to a pre-established distribution of the compression of said front and rear suspensions an overload acting on the front wheel (35) with respect to the pre-established condition is partially supported, through the rotative coupling member, by the rear wheel (62), and vice-versa in the case of an overload acting on the rear wheel or in the case of a decrease of the load supported by any one of said suspensions, characterized in that the torsion bar (15, 55) is rotatively mounted in a direction transverse with respect to the longitudinal direction of the vehicle, and in that one of the end arms (54) of the torsion bar (55) is pivotally connected to a link (53) which is connected, in turn, through a pivotal connecting head (52) to one of said movable rest plates (50) supporting the respective suspension spring (37), whereas the other end arm (56) of said torsion bar (55) is pivotally connected through a bent arm (57) to said movable rest plate (65) of the respective suspension spring (60).

2. Coupling device according to claim 1, characterized in that the length of the link (53) is adjustable under load so as to allow the pre-established relative compressions of the front and rear suspension to be modified.

3. Coupling device according to any one of claims 1 and 2, wherein at least one of the suspension springs is a helical spring (37, 60) compressed on an annular rest piece (39) by a movable plate (50, 65) connected to a pusher rod (46, 59) which extends substantially axially through the helical spring and the movable plate, characterized in that the link (53) and the bent arm (57) which cooperate with the suspension spring (37, 60) are each pivotally connected to an end piece (52, 58) fixed onto the end of the pusher rod (46, 59) which extends through the movable plate (50, 65).

4. Coupling device according to claim 3, characterized in that said end piece (52, 58) is fixed to the end of said pusher rod (46, 59) by adjustably screwing a threaded bore of said end piece onto an outer end thread of the pusher rod.

5. Coupling device according to claim 4, characterized in that said outer end thread of the pusher rod (46, 59) is adapted to be used at the same time for adjusting the position of the end piece (52, 58) to which said link (53) or said bent arm (57) are pivotally connected, and for adjusting the movable plate (50, 65) that compresses said suspension spring (37, 60).

**Patentansprüche**

1. Vorrichtung zum Koppeln der Aufhängung (1, 37, 38) eines Vorderrads (35) und der Aufhängung (5, 60, 64) eines Hinterrards (62) eines Räder-Fahrzeugs, wie Motorrad, wobei die Aufhängungen eine bewegliche Platte (2, 6, 50, 65) und eine Aufhängungsfeder (1, 5, 37, 60) aufweisen, die durch die Platte unter Einwirkung der das Vorderrad bzw. das Hinterrad beaufschlagenden Last zusammengedrückt wird, sowie auf jeder Fahrzeugseite vorn und hinten ein mechanisches Koppelmittel (20, 23, 53, 57) besitzen, dessen eines Ende an das Federabstützelement (2, 6, 50, 65) einer zwischen der Vorderradaufhängung und der Hinterradaufhängung des Fahrzeugs drehbar an wenigstens einem vom Fahrzeug getragenen Lager (16, 17) angeordneten Drehstabfeder (15, 55) angelenkt ist, derart, dass in bezug auf einen vorausbestimmten Zustand der Zusammen-drük-kungsverteilung auf die Vorderrad- und Hinterradaufhängung des Fahrzeugs eine Überlastung des Vorderrads (35) in bezug auf den vorbestimmten Zustand vermittels des drehbaren Koppelmittels teilweise vom Hinterrad (62) aufgenommen wird und umgekehrt im Falle einer Überlastung des Hinterrads oder einer Verminderung der von einer der Aufhängungen aufgenommenen Last, dadurch gkennzeichnet, dass die Drehstabfeder (15, 55) drehbar in einer in bezug auf die Längsrichtung des Fahrzeugs querliegenden Richtung angeordnet ist, und dass einer der Endarme (54) der Drehstabfeder (55) an einen Schwingarm (53) angelenkt ist, der seinerseits vermittels eines Gelenkkopfs (52) an eine der beweglichen Abstützplatten (50) der betreffenden Aufhängungsfeder (37) angelenkt ist, während der andere Endarm (56) der Drehstabfeder (55) vermittels eines Winkelarms (57) an die bewegliche Abstützplatte (65) der betreffenden Aufhängungsfeder (60) angelenkt ist.

2. Koppelvorrichtung nach Anspruch 1, dadurch gekennzeichnet, dass die Länge des Schwingarms (53) unter Belastung einstellbar ist, um es zu gestatten, die vorbestimmten relativen Zusammendrückungswerte der Vorderradaufhängung und der Hinterradaufhängung zu ändern.

3. Koppelvorrichtung nach Anspruch 1 oder 2, bei der wenigstens eine der Aufhängungsfedern als auf einem ringförmigen Abstützteil (39) abgestützte, durch eine bewegliche Platte (50, 65) zusammengedrückte Schraubenfeder (37, 60) ausgebildet ist, wobei die bewegliche Platte mit einer Schubstange (46, 59) verbunden ist, die sich wesentlich axial durch die Schraubenfeder (37, 60) und die bewegliche Platte erstreckt, dadurch gekennzeichnet, dass der Schwingarm (53) und der Winkelarm (57), die mit der Aufhängungsfeder (37, 60) zusammenwirken, je an ein am Ende der die bewegliche Platte (50, 65) durchquerenden Schubstange (46, 59) befestigten Endstück (52, 58) angelenkt sind.

4. Koppelvorrichtung nach Anspruch 3, dadurch gekennzeichnet, dass das Endstück (52, 58) am Ende der Schubstange (46, 59) durch einstellbares Aufschrauben eines Innengewindes des Endstücks auf ein äusseres Endgewinde der Schubstange befestigt ist.

5. Koppelvorrichtung nach Anspruch 4, dadurch gekennzeichnet, dass das Endgewinde der Schubstange (46, 59) gleichzeitig einerseits zum Einstellen der Lage des Endstücks (52, 58), an das der Schwingarm (53) bzw. der Winkelarm (57) angelenkt ist, und andererseits zum Einstellen der die Aufhängungsfeder (37, 60) zusammendrückenden beweglichen Platte (50, 65) verwendbar ist.

FIG.1

FIG.2

0 168 273